# EUROPEAN PATENT APPLICATION

(11) **EP 3 216 635 A1**
(43) Date of publication of application: **13.09.2017**
(21) Application number: 17160101.6
(22) Date of filing: 09.03.2017
(51) Int. Cl.: B60G 17/052

(54) **VEHICLE-HEIGHT CONTROL SYSTEM**

(30) Priority: 09.03.2016 JP 2016045215
(71) Applicant: TOYOTA JIDOSHA KABUSHIKI KAISHA, Toyota-Shi, Aichi-Ken 471-8571 (JP); AISIN SEIKI KABUSHIKI KAISHA, Kariya-shi, Aichi-ken, 448-8650 (JP)
(72) Inventor: OHASHI, Hideki, TOYOTA-SHI, AICHI-KEN, 471-8571 (JP); TANAKA, Shogo, TOYOTA-SHI, AICHI-KEN, 471-8571 (JP); TOKUMITSU, Jun, TOYOTA-SHI, AICHI-KEN, 471-8571 (JP); KANDA, Ryo, TOYOTA-SHI, AICHI-KEN, 471-8571 (JP); IKEYA, Masao, TOYOTA-SHI, AICHI-KEN, 471-8571 (JP); OISHI, Masaaki, KARIYA-SHI, AICHI-KEN, 448-8650 (JP); OGUE, Ken, KARIYA-SHI, AICHI-KEN, 448-8650 (JP); OHASHI, Masakazu, KARIYA-SHI, AICHI-KEN, 448-8650 (JP)
(74) Representative: Intès, Didier Gérard André

(57) **Abstract**

A vehicle-height control system executes down control for lowering a vehicle height. In the case where the vehicle height is lowered, when a tank pressure which is a pressure of a pressure medium stored in a tank (34) is lower than a set pressure, air is discharged from an air cylinder (2) and supplied to the tank (34), but when the tank pressure is higher than or equal to the set pressure, air is discharged from the air cylinder (2) to the outside. Thus, even when the tank pressure is greater than or equal to the set pressure at time t1, the down control is continued without being suspended. Accordingly, a time required for the down control can be reduced by time ΔT when compared with the case where when the tank pressure becomes greater than or equal to the set pressure during the down control, the down control is suspended, and discharge control is executed to discharge the pressure medium from the tank (34) to the outside.

## Description

### BACKGROUND

The following disclosure relates to a vehicle-height control system including a tank for storing a pressure medium.

Patent Document 1 (Japanese Patent Application Publication No. 3-70615) discloses a vehicle-height control system that discharges air from air cylinders to the atmosphere to lower a vehicle height.

### SUMMARY

Accordingly, an aspect of the disclosure relates to a vehicle-height control system that executes down control for lowering a vehicle height, with a short length of time.

In a vehicle-height control system according to the present invention, in the case where the vehicle height is lowered, when a tank pressure which is a pressure of a pressure medium stored in a tank is lower than a set pressure, the pressure medium is discharged from an vehicle-height control actuator and supplied to the tank, but when the tank pressure is higher than or equal to the set pressure, the pressure medium is discharged from the vehicle-height control actuator to the outside. Thus, even when the tank pressure is greater than or equal to the set pressure, the down control is continued without being suspended. Accordingly, a time required for the down control can be reduced when compared with the case where when the tank pressure becomes greater than or equal to the set pressure during the down control, the down control is suspended, and discharge control is executed to discharge the pressure medium from the tank to the outside.

### BRIEF DESCRIPTION OF THE DRAWINGS

The objects, features, advantages, and technical and industrial significance of the present disclosure will be better understood by reading the following detailed description of the embodiment, when considered in connection with the accompanying drawings, in which:
Fig. 1 is a circuit diagram of a vehicle-height control system according to one embodiment;
Fig. 2 is a conceptual view illustrating a vehicle-height control ECU and devices connected thereto in the vehicle-height control system;
Fig. 3A is a view illustrating a state in the case where air is supplied to a tank of the vehicle-height control system, and Fig. 3B is a view illustrating a state in the case where air is discharged from the tank;
Fig. 4A is a view illustrating a state in the case where air is supplied to air cylinders of the vehicle-height control system, and Fig. 4B is a view illustrating a state (air-returning-to-tank state) in the case where air is discharged from the air cylinders;
Fig. 5 is a view illustrating a state (non-air-returning-to-tank state) in the case where air is discharged from the air cylinders;
Fig. 6 is a flow chart illustrating a down control program stored in a storage of a vehicle-height control ECU;
Fig. 7 is a flow chart illustrating an air-discharge control program stored in the storage of the vehicle-height control ECU;
Fig. 8A is a view illustrating operations in another vehicle-height control system, and Fig. 8B is a view illustrating operations of the vehicle-height control system according to the one embodiment; and
Fig. 9 is a view illustrating another state (non-air-returning-to-tank state) in the case where air is discharged from the air cylinders.

### DETAILED DESCRIPTION OF THE EMBODIMENT

Hereinafter, there will be described a vehicle-height control system according to one embodiment by reference to the drawings. The present vehicle-height control system utilizes air as a pressure medium.

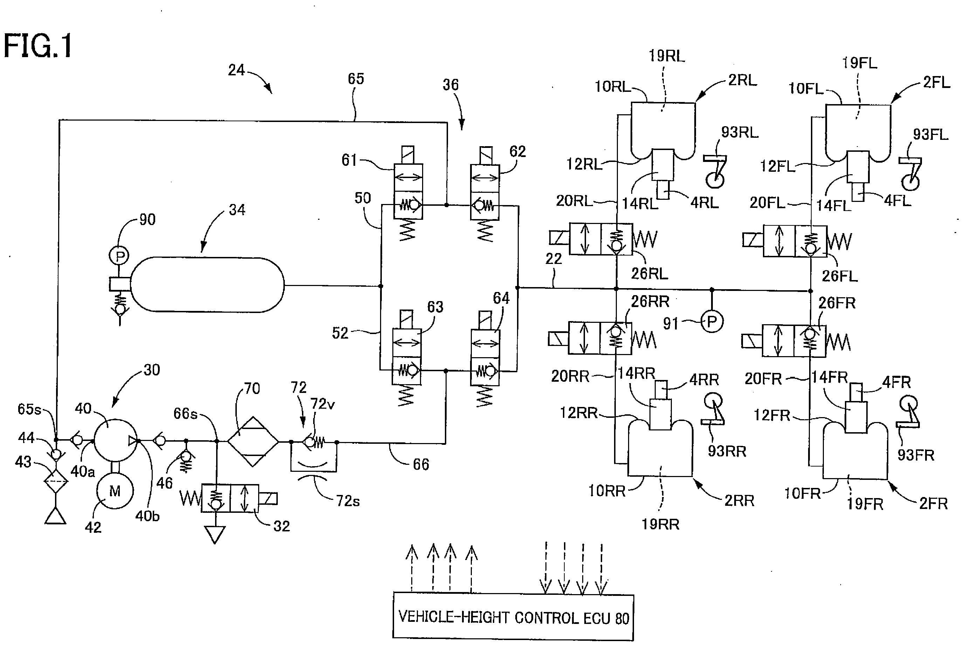

In this vehicle-height control system, as illustrated in Fig. 1, air cylinders 2FL, 2FR, 2RL, 2RR each as a vehicle-height control actuator and shock absorbers 4FL, 4FR, 4RL, 4RR are provided in parallel between a wheel-side member and a vehicle-body-side member, not illustrated. The air cylinders 2FL, 2FR, 2RL, 2RR respectively correspond to front left, front right, rear left, and rear right wheels provided on a vehicle. Likewise, the shock absorbers 4FL, 4FR, 4RL, 4RR respectively correspond to the front left, front right, rear left, and rear right wheels. Each of the shock absorbers 4FL, 4FR, 4RL, 4RR includes a cylinder body provided on the wheel-side member and a piston provided on the vehicle-body-side member. In the following description, each of the air cylinders 2 and other similar components will be referred with a corresponding one of suffixes (FL, FR, RL, RR) indicative of the respective wheels where the air cylinders 2 and other similar component should be distinguished by their respective wheel positions. On the other hand, where these devices are collectively referred, or the distinction is not required, each of the air cylinders 2 and other similar components will be referred without such suffixes. Each of the air cylinders 2 includes: a cylinder body 10 provided on the vehicle-body-side member; a diaphragm 12 fixed to the cylinder body 10; and an air piston 14 provided on the diaphragm 12 and the cylinder body of the corresponding shock absorber 4 so as to be immovable relative to the diaphragm 12 and the cylinder body in the up and down direction. Interiors of these components serve as an air chamber 19 as a pressure medium chamber. When air is supplied to or discharged from the air chamber 19, the air piston 14 is moved relative to the cylinder body 10 in the up and down direction. This movement moves the cylinder body and the piston of the shock absorber 4 relative to each other in the up and down direction. As a result, a distance between the wheel-side member and the vehicle-body-side member is changed, that is, a vehicle height is changed.

An air supply and discharge device 24 as a pressure-medium supply and discharge device is connected to the air chambers 19 of the respective air cylinders 2, via respective individual passages 20 and a common passage 22. Vehicle-height control valves 26 are provided on the respective individual passages 20. Each of the vehicle-height control valves 26 is a normally closed electromagnetic valve. When being in an open state, the vehicle-height control valve 26 allows flow of air in opposite directions. When being in a closed state, the vehicle-height control valve 26 prevents flow of air in a direction directed from the air chambers 19 to the common passage 22 but allows flow of air in the direction directed from the common passage 22 to the air chambers 19 when a pressure of air in the common passage 22 becomes higher than a pressure of air in the air chamber 19 by a set pressure.

The air supply and discharge device 24 includes a compressor device 30, an air discharge valve 32 as one example of a discharge valve, a tank 34, a switching device 36, an intake valve 44, and a relief valve 46. The compressor device 30 includes a compressor 40 and an electric motor 42 that drives the compressor 40 to operate it. When a discharge pressure of the compressor 40 has increased, air is discharged to the atmosphere via the relief valve 46. The tank 34 stores air in a pressurized state. A pressure of the air in the tank 34 (hereinafter may be referred to as "tank pressure") increases with increase in amount of air stored in the tank 34.

The switching device 36 is provided among the common passage 22, the tank 34, and the compressor device 30 to switch a direction in which air flows among them. As illustrated in Fig. 1, the common passage 22 and the tank 34 are connected to each other by a first passage 50 and a second passage 52 which are provided in parallel. Circuit valves 61, 62 are provided on the first passage 50 in series. Circuit valves 63, 64 are provided on the second passage 52 in series. A third passage 65 is connected to the first passage 50 at a position located between the two circuit valves 61, 62 and connected to an intake-side portion 40a of the compressor 40. A fourth passage 66 is connected to the second passage 52 at a position located between the two circuit valves 63, 64 and connected to an ejection-side portion 40b of the compressor 40. Each of the circuit valves 61-64 is a normally closed valve. When being in an open state, each of the circuit valves 61-64 allows flow of air in opposite directions. When being in a closed state, each of the circuit valves 61-64 prevents flow of air from one side to the other side but allows flow of air from the other side to the one side when a pressure of air on the other side becomes higher than that on the one side by a set pressure. Each of the circuit valves 61, 63 in the closed state prevents air from flowing out of the tank 34. The circuit valve 62 in the closed state prevents air from flowing out of the common passage 22. The circuit valve 64 in the closed state prevents supply of air to the common passage 22.

The intake valve 44 is provided between a connecting portion 65s of the third passage 65 and the atmosphere. The intake valve 44 is a check valve that is closed when a pressure of air at the connecting portion 65s is equal to or higher than the atmospheric pressure and that is open when the pressure of air at the connecting portion 65s is lower than the atmospheric pressure. When the pressure of air at the connecting portion 65s becomes lower than the atmospheric pressure by the operation of the compressor 40, air is sucked from the atmosphere via a filter 43 and the intake valve 44. The air discharge valve 32 is connected to a connecting portion 66s of the fourth passage 66. The air-discharge valve 32 is a normally closed electromagnetic valve. When being in an open state, the air-discharge valve 32 allows discharge of air from the fourth passage 66 to the atmosphere. When being in a closed state, the air-discharge valve 32 prevents discharge of air from the fourth passage 66 to the atmosphere. The air-discharge valve 32 however allows supply of air from the atmosphere to the fourth passage 66 when a pressure of air in the fourth passage 66 becomes lower than the atmospheric pressure by a set pressure in the closed state. A dryer 70 and a flow restricting mechanism 72 are provided in series on the fourth passage 66 at positions located on a side of the connecting portion 66s which is located nearer to the second passage 52. The flow restricting mechanism 72 includes a pressure differential valve 72v and a restrictor 72s provided in parallel. The pressure differential valve 72v prevents flow of air from a second-passage side to a compressor side. When a pressure on the compressor side becomes higher than that on the second-passage side by a set pressure, the pressure differential valve 72v allows flow of air from the compressor 40 to the second passage 52.

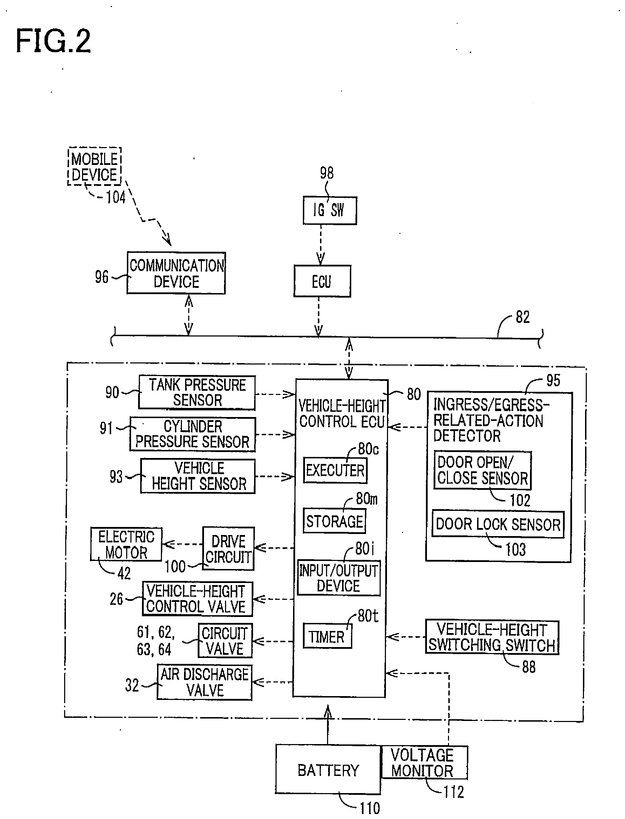

In the present embodiment, the vehicle-height control system is controlled by a vehicle-height control electronic control unit (ECU) 80 mainly constituted by a computer. The vehicle-height control ECU 80 is communicable with devices, such as ECUs, via a controller area network (CAN) 82. As illustrated in Fig. 2, the vehicle-height control ECU 80 includes an executer 80c, a storage 80m, an input/output device 80i, and a timer 80t. Devices connected to the input/output device 80i include a vehicle-height switching switch 88, a tank pressure sensor 90, a cylinder pressure sensor 91, vehicle height sensors 93, and ingress/egress-related-action detectors 95. Also, devices including a communication device 96 and an ignition switch 98 are connected to the input/output device 80i via the CAN 82. The electric motor 42 is connected to the input/output device 80i via a drive circuit 100. The air-discharge valve 32, the vehicle-height control valves 26, and the circuit valves 61-64 are connected to the input/output device 80i.

A driver operates the vehicle-height switching switch 88 to instruct a change of the vehicle height to one of "L" (Low), "N" (Normal), and "H" (High). The tank pressure sensor 90 detects the tank pressure. The cylinder pressure sensor 91 is provided on the common passage 22. When any of the vehicle-height control valves 26 is open, the cylinder pressure sensor 91 detects a pressure of air in the air chamber 19 defined in the air cylinder 2 corresponding to the open vehicle-height control valve 26 (the wheel). When all the vehicle-height control valves 26 are closed, the cylinder pressure sensor 91 detects a pressure of the air in the common passage 22. The vehicle height sensors 93 are provided for the respective wheels 2FL, 2FR, 2RL, 2RR. Each of the vehicle height sensors 93 detects a deviation from a standard distance between the wheel-side member and the vehicle-body-side member (noted that the standard distance corresponds to a standard vehicle height) to detect a vehicle height which is a distance between the vehicle-body-side member and the wheel-side member, i.e., a height of the vehicle-body-side member from the wheel-side member. The ingress/egress-related-action detectors 95 detect the presence or absence of operation relating to getting on and off of the vehicle. The ingress/egress-related-action detectors 95 are provided respectively for a plurality of doors provided on the vehicle. Each of the ingress/egress-related-action detectors 95 includes: a door open/close sensor (a courtesy lamp sensor) 102 that detects opening and closing of a corresponding one of the doors; and a door lock sensor 103 that detects a locking operation and an unlocking operation for the corresponding door. Getting on and off and intention of start of driving are estimated based on opening and closing of the door and the locking and unlocking operations for the door, for example. The communication device 96 communicates with a mobile device 104 owned by, e.g., the driver in a predetermined communicable area. The locking and unlocking operations for the door may be performed based on the communication of the communication device 96. In the present embodiment, the vehicle-height control system is operable by electric power provided from a battery 110. The voltage of the battery 110 is detected by a voltage monitor 112 that is connected to the vehicle-height control ECU 80.

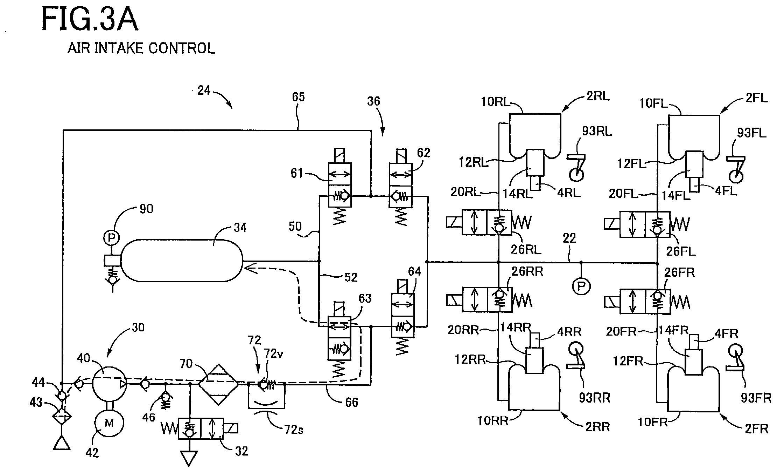

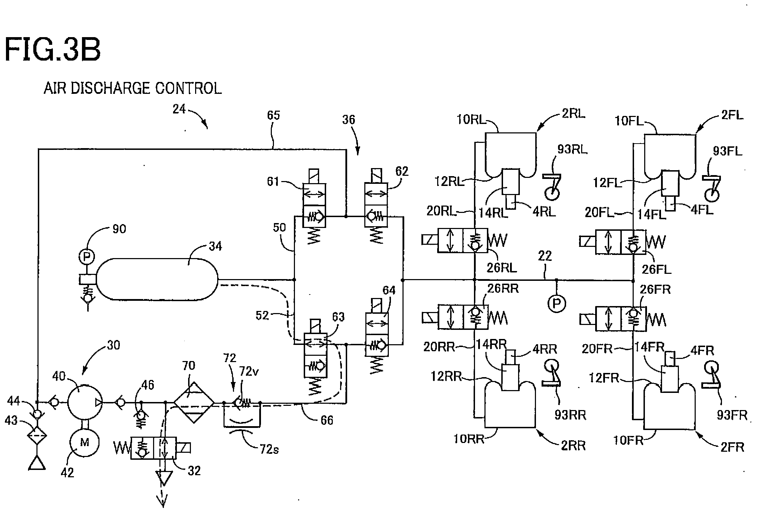

There will be next explained control of the tank pressure. Vehicle height control is executed using the tank 34 in the vehicle-height control system configured as described above. The vehicle height control includes control of the tank pressure which includes: air intake control as supply control for supplying air to the tank 34; and air discharge control as discharge control for discharging air from the tank 34. The air intake control is started when a tank pressure PT detected by the tank pressure sensor 90 becomes lower than or equal to an air-intake start threshold value. As illustrated in Fig. 3A, the electric motor 42 is driven to operate the compressor 40 in a state in which the circuit valves 61, 62, 64 are closed, and the circuit valve 63 is open. As a result, air is sucked by the compressor 40 from the atmosphere via the intake valve 44 as a supply valve and transferred into the tank 34. The air intake control is finished when the tank pressure PT becomes higher than an air-intake termination threshold value. As a result, the circuit valves 61-64 are closed, and the electric motor 42 is stopped. The air discharge control is started when the tank pressure PT becomes higher than or equal to a set pressure, i.e, an air-discharge start threshold value Pds as one example of a discharge-start threshold value. As illustrated in Fig. 3B, the circuit valves 61, 62, 64 are closed, the circuit valve 63 is open, and the air discharge valve 32 as the discharge valve is open. Air in the tank 34 is discharged to the atmosphere via the dryer 70 and the air discharge valve 32. The air discharge control is finished when the tank pressure PT becomes lower than an air-discharge termination threshold value Pde. As a result, the circuit valves 61-64 and the air discharge valve 32 are closed.

There will be next explained the vehicle height control. In the vehicle-height control system according to the present embodiment, a target vehicle height is determined for each of the front left and right and rear left and right wheels based on a running state of the vehicle. The air supply and discharge device 24 and the vehicle-height control valves 26 are controlled such that an actual vehicle height is brought closer to the target vehicle height for each wheel. The vehicle height control is also executed in the case where a predetermined condition is satisfied. Examples of this case include: a case where the vehicle-height switching switch 88 is operated; a case where it is estimated that a person is to get on or off the vehicle, and a case where an after-egress set value is elapsed. For example, in the case where a deviation, which is a value obtained by subtracting the target vehicle height determined based on the running state from the actual vehicle height, is greater than or equal to a set value, in the case where a vehicle height instructed by the vehicle-height switching switch 88 is lower than the actual vehicle height, or in the case where the after-egress set value is elapsed, it is determined that a down request is issued (in other words, a condition of start of down control is satisfied), and the down control is started.

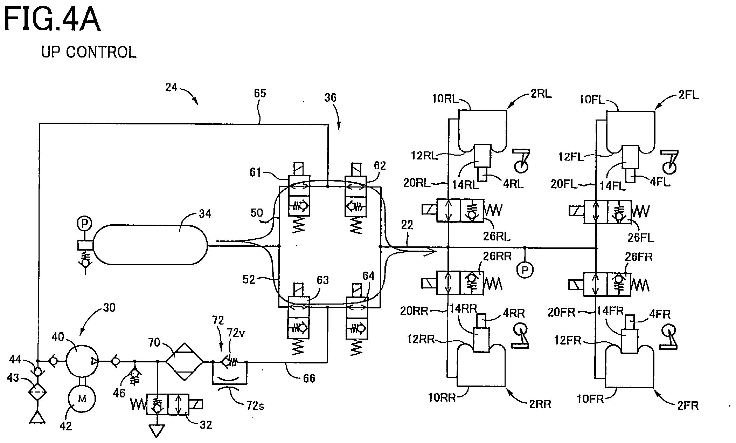

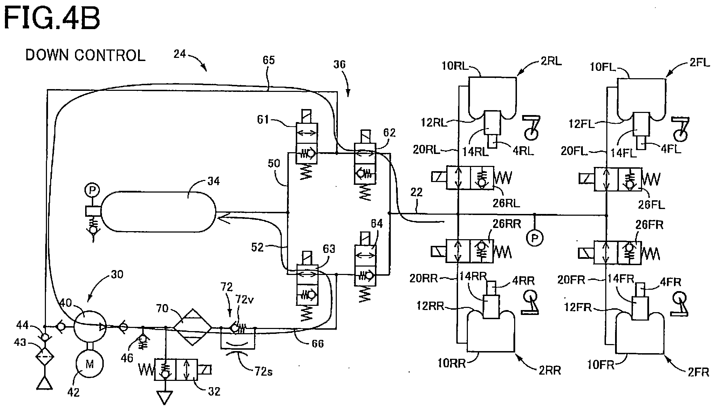

For example, in the case where the vehicle height is to be increased (noted that this control may be hereinafter referred to as "up control"), as illustrated in Fig. 4A, the circuit valves 61-64 are opened, and the vehicle-height control valve 26 corresponding to each control target wheel is opened. In Figs. 3A and 3B, the front left and right and rear left and right wheels are control target wheels, but the following explanation will be provided for one of the control target wheels for simplicity. The air stored in the tank 34 is supplied to the air chamber 19 defined in the air cylinder 2 provided for the control target wheel. As a result, the vehicle height for the control target wheel is increased. In the case where the vehicle height is to be reduced (noted that this control may be hereinafter referred to as "down control"), as illustrated in Fig. 4B, the electric motor 42 is driven to actuate the compressor 40, the circuit valves 61, 64 are closed, the circuit valves 62, 63 are opened, and the vehicle-height control valve 26 corresponding to the control target wheel is opened. Air is discharged from the air chamber 19 defined in the air cylinder 2 provided for the control target wheel and is supplied to the tank 34. This state is referred to as "air-returning-to-tank state".

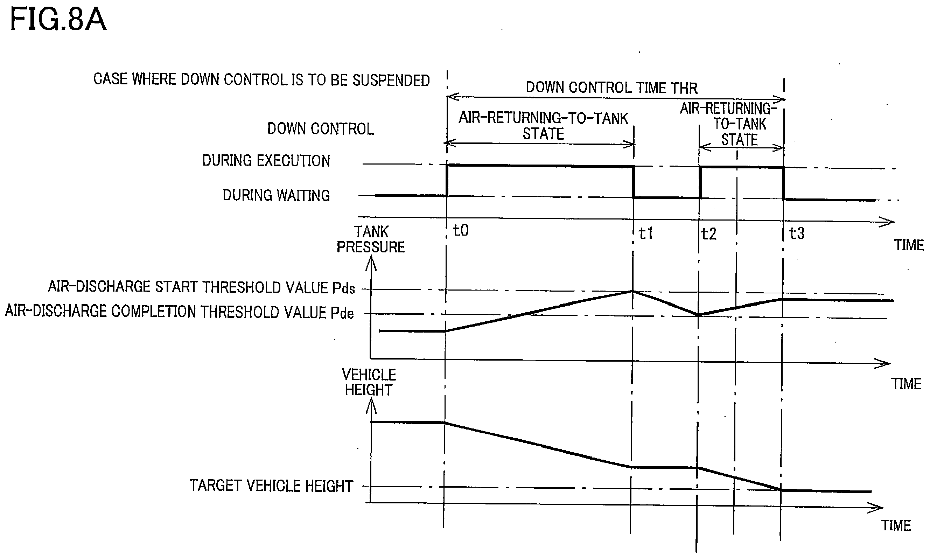

However, when the tank pressure becomes higher than or equal to the air-discharge start threshold value Pds in the case where the air-returning-to-tank state is established in the down control, it is difficult to supply air to the tank 34. In this case, it is considered that the down control is suspended to execute the air discharge control for the tank pressure, and the down control is started again after completion of the air discharge control. Fig. 8A illustrates one example of these operations. At time t0, the condition of start of the down control is satisfied, and a start processing is executed. As described above, the circuit valves 61, 64 are closed, the circuit valves 62, 63 are opened, and the electric motor 42 is driven to establish the air-returning-to-tank state illustrated in Fig. 4B. Air in the air cylinder 2 is supplied to the tank 34, so that the tank pressure PT is increased. When the tank pressure PT becomes higher than or equal to the air-discharge start threshold value Pds at time t1, the down control is suspended, and the air discharge control is started. As a result, the circuit valve 62 is closed, the air discharge valve 32 is opened, and the electric motor 42 is stopped, so that as illustrated in Fig. 3B the air stored in the tank 34 is discharged to the atmosphere via the air discharge valve 32. When the tank pressure PT is reduced to a value lower than the air-discharge termination threshold value Pde at time t2, the air discharge control is terminated, and the down control is started again. The circuit valve 62 is opened, the air discharge valve 32 is closed, and the electric motor 42 is driven to establish the air-returning-to-tank state illustrated in Fig. 4B. In the case where an actual vehicle height H* at time t3 becomes substantially equal to a target vehicle height Href or in the case where the actual vehicle height H* at time t3 reaches a range determined by the target vehicle height Href and the width of the dead band ΔH (Href ± ΔH) (noted that these cases will be collectively referred to as a case where the actual vehicle height H* has been brought close to the target vehicle height Href), a terminating condition is satisfied, and the down control is terminated. Thus, when the tank pressure PT becomes higher than or equal to the air-discharge start threshold value Pds in the down control, the down control is suspended to execute the air discharge control. This processing increases a length of time between establishment of the condition of start of the down control and establishment of the terminating condition. That is, this processing increases a down control time THR (time t0 to time t3) which is required for the down control.

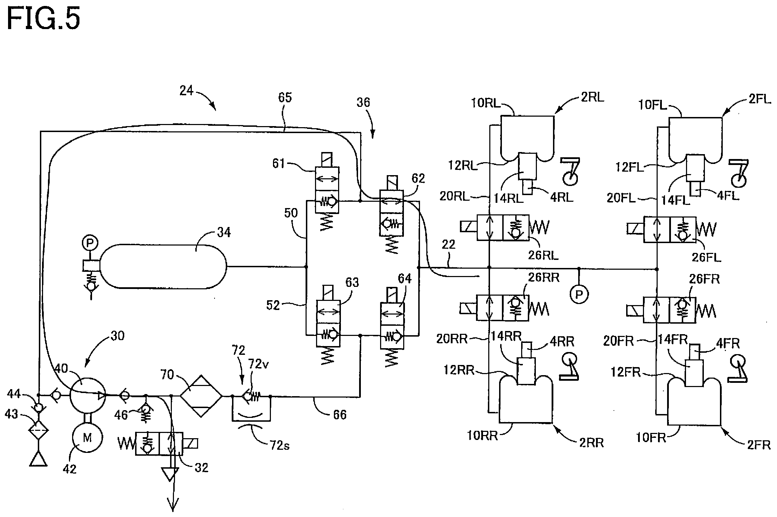

In the vehicle-height control system according to the present embodiment, in contrast, even when the tank pressure PT becomes higher than or equal to the air-discharge start threshold value Pds in the down control, the down control is continued without being suspended. When the tank pressure PT becomes higher than or equal to the air-discharge start threshold value Pds, as illustrated in Fig. 5, the circuit valves 61, 63, 64 are closed, the circuit valve 62 is opened, and the air discharge valve 32 is opened, so that the air in the air cylinder 2 is discharged to the atmosphere as the outside. This state will be referred to as "non-air-returning-to-tank state". In this non-air-returning-to-tank state, the compressor 40 may be in an operating state or in a stopped state.

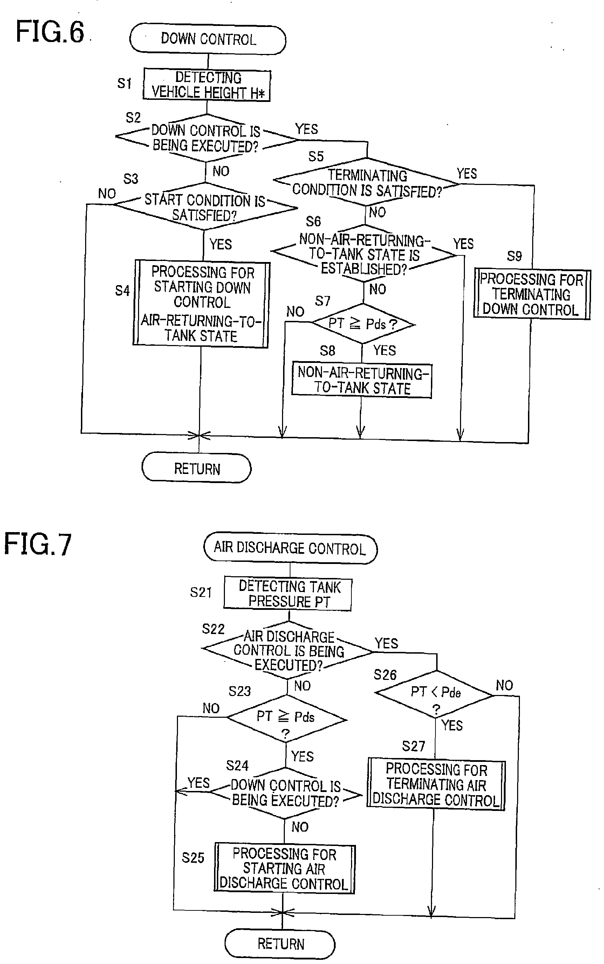

A vehicle-height control program (down control program) illustrated in a flow chart in Fig. 6 is executed each time when a predetermined set time period is elapsed. At S1, each of the vehicle height sensors 93 detects the actual vehicle height H* for a corresponding one of the wheels. It is determined at S2 whether the down control is being executed. When the down control is not being executed, it is determined at S3 whether the condition of start of the down control is satisfied. When the start condition is satisfied, a processing for starting the down control is executed at S4 to establish the air-returning-to-tank state illustrated in Fig. 4B. When the down control is being executed, a positive decision (YES) is made at S2, and this flow goes to S5 at which it is determined whether the terminating condition is satisfied. That is, it is determined whether the actual vehicle height H* has been brought close to the target vehicle height Href. When a negative decision (NO) is made at S5, it is determined at S6 whether the non-air-returning-to-tank state is established. When the non-air-returning-to-tank state is not established, it is determined at S7 whether the tank pressure PT has reached the air-discharge start threshold value Pds. When the tank pressure PT is lower than the air-discharge start threshold value Pds, the processings at S1, 2, and 5-7 are executed repeatedly. When the tank pressure PT becomes higher than or equal to the air-discharge start threshold value Pds before the terminating condition is satisfied, a positive decision (YES) is made at S7, and the non-air-returning-to-tank state illustrated in Fig. 5 is established at S8. A positive decision (YES) is thereafter made at S6, and accordingly the processings at S1, S2, S5, and S6 are executed repeatedly, so that the down control is executed in the non-air-returning-to-tank state. That is, the down control is executed repeatedly. When the actual vehicle height H* has been brought close to the target vehicle height Href, and a positive decision (YES) is made at S5, a processing for terminating the down control is executed at S9. In this processing, the air discharge valve 32 is closed, and the circuit valve 62 is closed. It is noted that when the actual vehicle height H* has been brought close to the target vehicle height Href in the air-returning-to-tank state, a processing for terminating the down control is executed at S9 without change to the non-air-returning-to-tank state. In this processing, the electric motor 42 is stopped, and the circuit valves 62, 63 are closed. It is noted that when the compressor 40 is changed to the operating state in the non-air-returning-to-tank state, the electric motor 42 is stopped at S9, while when the compressor 40 is changed to the stopped state in the non-air-returning-to-tank state, the electric motor 42 is stopped at S8.

An air-discharge control program for the tank pressure which is illustrated in the flow chart in Fig. 7 is executed each time when a predetermined set time period is elapsed. The tank pressure PT is detected at S21, and it is determined at S22 whether the air discharge control is being executed. When the air discharge control is not being executed, it is determined at S23 whether the tank pressure PT is higher than or equal to the air-discharge start threshold value Pds. When the tank pressure PT is lower than the air-discharge start threshold value Pds, the processings at S21, S22, and S23 are executed repeatedly. When the tank pressure PT becomes higher than or equal to the air-discharge start threshold value Pds, it is determined at S24 whether the down control is being executed. When the down control is not being executed, a processing for starting the air discharge control is executed at S25. In this processing, as illustrated in Fig. 3B, the circuit valve 63 is opened, and the air discharge valve 32 is opened, so that air is discharged from the tank 34 to the atmosphere as the outside via the air discharge valve 32. When the air discharge control is being executed, a positive decision (YES) is made at S22, and this flow goes to S26 at which it is determined whether the tank pressure PT becomes lower than the air-discharge termination threshold value Pde. While the tank pressure PT is higher than or equal to the air-discharge termination threshold value Pde, the processings at S21, S22, and S26 are executed repeatedly. When the tank pressure PT becomes lower than the air-discharge termination threshold value Pde, a processing for terminating the air discharge control is executed at S27. In this processing, the air discharge valve 32 is closed, and the circuit valve 63 is closed. In the case where the down control is being executed when the tank pressure PT becomes higher than or equal to the air-discharge start threshold value Pds, a positive decision (YES) is made at S24, the processing at S25 is not executed. That is, the air discharge control is not executed. After completion of the down control, a negative decision (NO) is made at S24, a processing for starting the air discharge control is executed at S25, and the air discharge control is executed as described above.

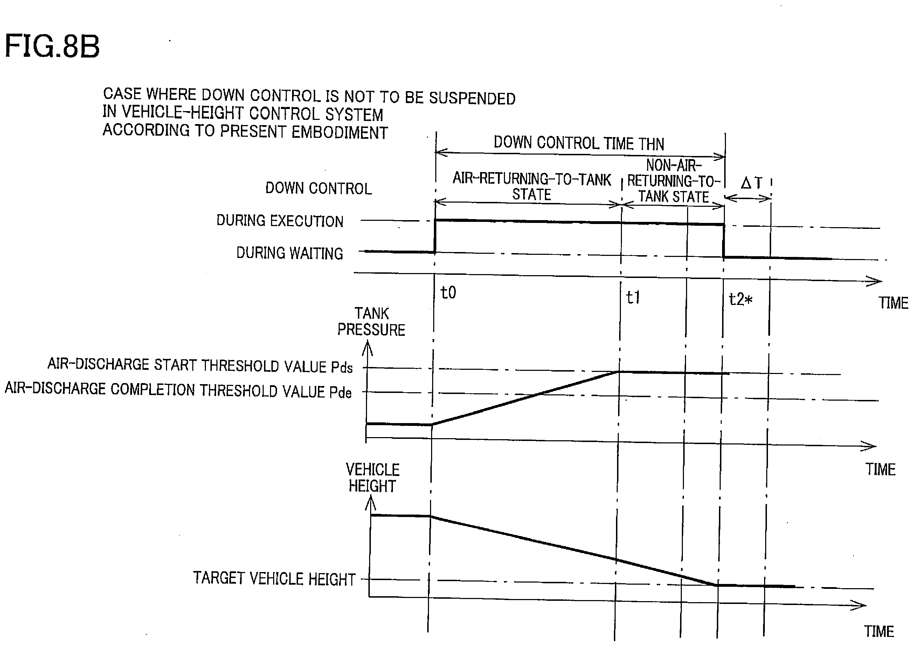

Fig. 8B illustrates operations in the vehicle-height control system according to the present embodiment. Even when the tank pressure PT has reached the air-discharge start threshold value Pds at time t1, the down control is continued without execution of the air discharge control for the tank pressure. In this case, as illustrated in Fig. 5, the circuit valve 63 is closed, and the air discharge valve 32 is opened, so that the air in the air cylinder 2 is discharged to the atmosphere via the third passage 65, the compressor 40, and the air discharge valve 32. Since the circuit valves 61, 63 are closed in the non-air-returning-to-tank state, no air flows out of the tank 34, so that the tank pressure is not changed. When the actual vehicle height H* has been brought close to the target vehicle height Href at time t2*, the down control is terminated. A down control time THN (time t0 - time t2*) in this case is shorter than the down control time THR in the case illustrated in Fig. 8A by a length of time ΔT (THR - THN = ΔT).

It is possible to consider that when the tank pressure PT has reached the air-discharge start threshold value Pds, the circuit valves 61, 62, 63 are closed, and the circuit valve 64 and the air discharge valve 32 are opened to discharge air from the air cylinder 2 to the atmosphere via the restrictor 72s, the dryer 70, and the air discharge valve 32. In this case, however, the restrictor 72s reduces the speed of outflow of the air from the air cylinder 2. In the present embodiment, in contrast, the air in the air cylinder 2 is discharged to the atmosphere via the third passage 65, the compressor 40, and the air discharge valve 32 without passing through the restrictor 72s. This construction increases the speed of outflow of the air from the air cylinder 2, thereby further shortening the down control time. Also, a load acting on the compressor 40 is less in the operating state of the compressor 40 in the non-air-returning-to-tank state than in the operating state of the compressor 40 in the air-returning-to-tank state which is established after the air discharge control executed in the case illustrated in Fig. 8A. Thus, power consumption of the battery 110 can be reduced accordingly. In the case where the compressor 40 is in the stopped state in the non-air-returning-to-tank state, it is possible to shorten a time of operation of the compressor 40, thereby further reducing the power consumption of the battery 110.

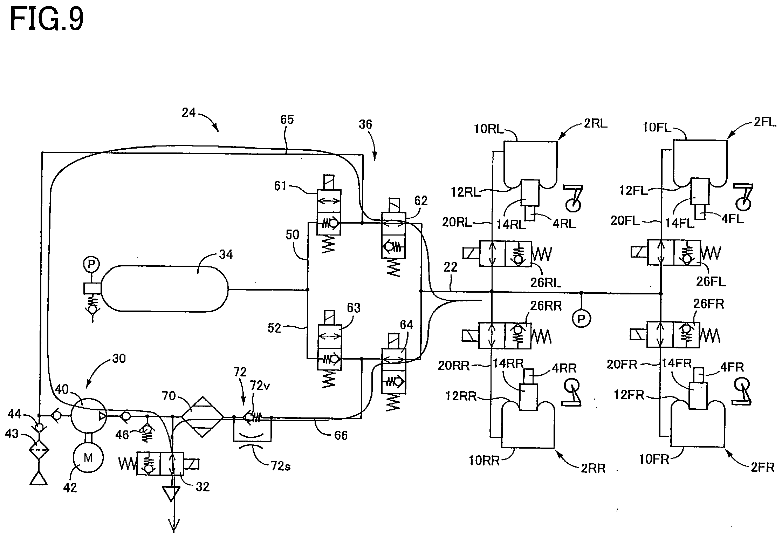

As illustrated in Fig. 9, the vehicle-height control system may be configured such that the circuit valves 61, 63 are closed, and the circuit valves 62, 64 are opened in the non-air-returning-to-tank state. In this configuration, the air in the air cylinder 2 may be discharged through both of (i) a passage including the third passage 65, the compressor 40, and the air discharge valve 32 and (ii) a passage including the restrictor 72s, the dryer 70, and the air discharge valve 32. This discharge further increases the speed of outflow of the air from the air cylinder 2, thereby shortening the down control time. The compressor 40 may be in any of the stopped state and the operating state in the state illustrated in Fig. 9.

In the present embodiment described above, each of a vehicle height controller and a down controller are constituted by the vehicle height sensors 93, the tank pressure sensor 90, and portions of the vehicle-height control ECU 80 which store and execute the down control program illustrated in the flow chart in Fig. 6. An intake-side passage is constituted by the third passage 65, the common passage 22, the individual passages 20, and a portion of the first passage 50 which is nearer to the air cylinders 2 than a portion of the first passage 50 which is connected to the third passage 65, for example. A discharge-side passage is constituted by the fourth passage 66 and a portion of the second passage 52 which is nearer to the tank 34 than a portion of the second passage 52 which is connected to the fourth passage 66, for example. An actuator-side passage is constituted by the common passage 22, the individual passages 20, and a portion of the second passage 52 which is nearer to the air cylinders 2 than the portion of the second passage 52 which is connected to the fourth passage 66, for example. The circuit valve 63 is one example of a first electromagnetic valve, and the circuit valve 64 is one example of a second electromagnetic valve. A valve controller is constituted by portions of the down controller which store and execute the processings at S4 and S8. A discharge controller is constituted by the tank pressure sensor 90 and portions of the vehicle-height control ECU 80 which store and execute the air-discharge control program illustrated in the flow chart in Fig. 7.

It is to be understood that the disclosure may be embodied with various changes and modifications, which may occur to those skilled in the art, without departing from the spirit and scope of the disclosure.

### ASPECTS OF THE PRESENT INVENTION

There will be described aspects of the present invention that are disclosed in the present application.
(1) A vehicle-height control system, comprising:
   a vehicle-height control actuator provided so as to correspond to a wheel;
   a pressure-medium supply and discharge device configured to supply and discharge a pressure medium to and from the vehicle-height control actuator and
   a vehicle height controller configured to control a vehicle height for the wheel by controlling the pressure-medium supply and discharge device,
   the pressure-medium supply and discharge device comprising a compressor and a tank configured to contain a pressure medium supplied from the compressor,
   the vehicle height controller comprising a down controller configured to operate the compressor to discharge and supply the pressure medium from the vehicle-height control actuator to the tank to lower the vehicle height when a tank pressure that is a pressure of the pressure medium contained in the tank is less than a set pressure, the down controller being configured to discharge the pressure medium from the vehicle-height control actuator to an outside to lower the vehicle height when the tank pressure is greater than or equal to the set pressure.
   The set pressure may be set to a value which the tank pressure preferably does not exceed, for example.
(2) The vehicle-height control system according to the above form (1), further comprising a discharge controller configured to discharge the pressure medium from the tank to the outside when the tank pressure becomes greater than or equal to a discharge-start threshold value,
   wherein the set pressure is the discharge-start threshold value.
   For example, unlike a configuration in which discharge control is executed, and down control is suspended when the tank pressure becomes greater than or equal to the discharge-start threshold value, the down control is continuously executed without execution of the discharge control in the vehicle-height control system according to this form, thereby shortening a length of time required for the down control.
(3) The vehicle-height control system according to the above form (1) or (2), further comprising (i) an intake-side passage connecting between the vehicle-height control actuator and an intake-side portion of the compressor, (ii) a discharge-side passage connecting between the tank and a discharge-side portion of the compressor, (iii) a discharge valve connected to the discharge-side passage, and (iv) a first electromagnetic valve that is an electromagnetic valve provided at a portion of the discharge-side passage which is located nearer to the tank than a portion of the discharge-side passage which is connected to the discharge valve,
   wherein the down controller comprises a valve controller configured to close the discharge valve and open the first electromagnetic valve when the tank pressure is less than the set pressure, the valve controller being configured to open the discharge valve and close the first electromagnetic valve when the tank pressure is greater than or equal to the set pressure.
   When the tank pressure is greater than or equal to the set pressure, the first electromagnetic valve is closed. Thus, the tank pressure is kept without discharge of the pressure medium from the tank to the outside. The compressor may be in any of the operating state and the stopped state in the case where the tank pressure is greater than or equal to the set pressure.
(4) The vehicle-height control system according to the above form (3), further comprising (a) an actuator-side passage connecting between the vehicle-height control actuator and a portion of the discharge-side passage which is located between the first electromagnetic valve and a portion of the discharge-side passage which is connected to the discharge valve and (b) a second electromagnetic valve that is an electromagnetic valve provided on the actuator-side passage,
   wherein the valve controller is further configured to close the second electromagnetic valve when the tank pressure is less than the set pressure and configured to open the second electromagnetic valve when the tank pressure is greater than or equal to the set pressure.

## Claims

1. A vehicle-height control system, comprising:
a vehicle-height control actuator (2) provided so as to correspond to a wheel;
a pressure-medium supply and discharge device (24) configured to supply and discharge a pressure medium to and from the vehicle-height control actuator (2); and
a vehicle height controller (80, 90, 93) configured to control a vehicle height for the wheel by controlling the pressure-medium supply and discharge device (24),
the pressure-medium supply and discharge device (24) comprising a compressor (40) and a tank (34) configured to contain a pressure medium supplied from the compressor (40),
the vehicle height controller (80, 90, 93) comprising a down controller (80, 90, 93) configured to operate the compressor (40) to discharge and supply the pressure medium from the vehicle-height control actuator (2) to the tank (34) to lower the vehicle height when a tank pressure (PT) that is a pressure of the pressure medium contained in the tank (34) is less than a set pressure (Pds), the down controller (80, 90, 93) being configured to discharge the pressure medium from the vehicle-height control actuator (2) to an outside to lower the vehicle height when the tank pressure (PT) is greater than or equal to the set pressure (Pds).

2. The vehicle-height control system according to claim 1, further comprising a discharge controller (80, 90) configured to discharge the pressure medium from the tank (34) to the outside when the tank pressure (PT) becomes greater than or equal to a discharge-start threshold value (Pds),
wherein the set pressure (Pds) is the discharge-start threshold value (Pds).

3. The vehicle-height control system according to claim 1 or 2, further comprising (i) an intake-side passage (20, 22, 50, 65) connecting between the vehicle-height control actuator (2) and an intake-side portion of the compressor (40), (ii) a discharge-side passage (52, 66) connecting between the tank (34) and a discharge-side portion of the compressor (40), (iii) a discharge valve (32) connected to the discharge-side passage (52, 66), and (iv) a first electromagnetic valve (63) that is an electromagnetic valve provided at a portion of the discharge-side passage (52, 66) which is located nearer to the tank (34) than a portion of the discharge-side passage (52, 66) which is connected to the discharge valve (32),
wherein the down controller (80, 90, 93) comprises a valve controller (80, 90, 93) configured to close the discharge valve (32) and open the first electromagnetic valve (63) when the tank pressure (PT) is less than the set pressure (Pds), the valve controller (80, 90, 93) being configured to open the discharge valve (32) and close the first electromagnetic valve (63) when the tank pressure (PT) is greater than or equal to the set pressure (Pds).

4. The vehicle-height control system according to claim 3, further comprising (a) an actuator-side passage (20, 22, 52) connecting between the vehicle-height control actuator (2) and a portion of the discharge-side passage (52, 66) which is located between the first electromagnetic valve (63) and a portion of the discharge-side passage (52, 66) which is connected to the discharge valve (32) and (b) a second electromagnetic valve (64) that is an electromagnetic valve provided on the actuator-side passage (20, 22, 52),
wherein the valve controller (80, 90, 93) is further configured to close the second electromagnetic valve (64) when the tank pressure (PT) is less than the set pressure (Pds) and open the second electromagnetic valve (64) when the tank pressure (PT) is greater than or equal to the set pressure (Pds).
